# EUROPÄISCHE PATENTSCHRIFT

(11) **EP 1 031 585 B1**
(45) Veröffentlichungstag und Bekanntmachung des Hinweises auf die Patenterteilung: **01.12.2004**
(21) Anmeldenummer: 00103887.6
(22) Anmeldetag: 24.02.2000
(51) Int. Cl.: C08F 226/00, C08F 2/22, C08F 226/02

(54) **Verfahren zur Herstellung wässriger Dispersionen von Copolymerisaten aus hydrophilen und hydrophoben Monomeren**
Method of preparation of aqueous dispersions from copolymers of hydrophilic and hydrophobic monomers
Procédé de préparation de dispersions aqueuses de copolymères à base de monomères hydrophiles et hydrophobes

(30) Priorität: 25.02.1999 DE 19908184
(43) Veröffentlichungstag der Anmeldung: 30.08.2000
(73) Patentinhaber: BASF AKTIENGESELLSCHAFT, 67056 Ludwigshafen (DE)
(72) Erfinder: Meffert, Helmut, 68161 Mannheim (DE); Angel, Maximilian, 67105 Schifferstadt (DE)
(74) Vertreter: Kinzebach, Werner, Dr.

(56) Entgegenhaltungen:
- EP-A- 0 867 455
- EP-A- 0 876 819
- EP-A- 1 010 707

## Beschreibung

Die vorliegende Erfindung betrifft ein Verfahren zur Herstellung wässriger Dispersionen von Copolymerisaten aus hydrophilen und hydrophoben Monomeren. Insbesondere betrifft die vorliegende Erfindung ein verfahren zur Herstellung von wässrigen Copolymerisatdispersionen ausgehend von Monomeren, die in verschiedenen pH-Wertbereichen unterschiedliches Reaktionsverhalten besitzen.

Es ist bekannt, dass es für bestimmte Monomere einen optimalen pH-Wertbereich zur Homo- bzw. Copolymerisation gibt. Beispielsweise lassen Vinylester, d. h. die Carbonsäureester des Vinylalkohols wie z. B. Vinylacetat, Vinylchloracetat oder Vinylpropionat, eine Emulsionspolymerisation bei pH-Werten oberhalb von 7,0 nicht zu. Die Polymerisationsgeschwindigkeit nimmt mit zunehmender pH-Wertabsenkung unter Werte von 7,0 zu. Dagegen werden aliphatische Vinylether mit unter 7,0 abnehmenden pH-Werten zunehmend zu Acetaldehyd und aliphatischen Alkoholen hydrolysiert (F. Hölscher, Dispersionen synthetischer Hochpolymerer, Teil I: Eigenschaften, Herstellung und Prüfung, Springer Verlag, Berlin, 1969). Gleiches gilt für N-Vinyllactame wie z. B. Vinylpyrrolidon und Vinylcaprolactam.

Die Patentschrift DE 1 089 930 B beschreibt versprühbare Haarfestiger, die ein Mischpolymerisat aus 90 bis 25 Gew.-% eines N-Vinylpyrrolidons und 10 bis 75 Gew.-% eines Vinylesters, z. B. Vinylacetat, enthalten, sowie ein Verfahren zur Herstellung dieser Copolymeren in niedrigsiedenden Alkoholen. Gemäß diesem Verfahren wird zu den in einem niedrigsiedenden Alkohol vorgelegten Monomeren der Initiator hinzugegeben. Die auf diese Weise erreichten K-Werte nach Fikentscher sind relativ gering und liegen nur zwischen 15 bis 60. Die Erzeugung von hohen K-Werten ist wegen der kettenübertragenden Wirkung der Alkohole mit diesem Verfahren schwer oder gar nicht möglich. Des Weiteren ist eine pH-Wertsteuerung des Reaktionsmediums während der Polymerisationsreaktion nicht vorgesehen.

Aus der US-A-5 319 041 ist die Copolymerisation von N-Vinylpyrrolidon (VP) und Vinylacetat (VAc) mit einem VP/VAc-Gewichtsverhältnis von 25 bis 75 Gew.-%/75 bis 25 Gew.-% in alkoholischer Lösung bekannt. Mit diesem Verfahren werden nur geringe K-Werte zwischen 25 und 40 erreicht. Auch hier sind hohe K-Werte aus den oben genannten Gesichtspunkten sowie aus verfahrenstechnischen Gründen nicht oder nur sehr schwer erreichbar.

Die DE-C-25 28 068 beschreibt vernetzte, wasserunlösliche hydrophile Gele, bestehend aus Copolymeren mit (a) 30 bis 90 Gew.-% bestimmter wasserlöslicher Monoolefine, wie z. B. Polyethylenoxidalkylacrylate, N-Vinylpyrrolidon, Acrylsäure, Methacrylsäure oder Hydroxyalkylacrylate, oder eines Gemisches dieser Monomere mit 1 bis 50 Gew.-% wasserunlöslicher Monoolefine; und (b) 10 bis 70 Gew.-% bestimmter hydrophober Makromere als Vernetzer mit einem mittleren Molekulargewicht zwischen 400 und 8 000 g/mol. Als wasserunlösliche Monomere werden genannt: Alkylacrylate und Alkylmethacrylate, wobei Alkyl bis zu 18 C-Atome aufweisen kann; Vinylester (z. B. Vinylacetat), die sich von Alkancarbonsäuren mit bis zu 5 C-Atomen ableiten; Styrol; und Alkylvinylether, wobei Alkyl bis zu 5 C-Atome enthält. Die Polymerisation wird in Masse oder in Lösung durchgeführt.

Die WO-A-97/31041 offenbart ein Verfahren zur Herstellung von pulverförmigen, nicht hygroskopischen, stark quellbaren, schwach vernetzten Copolymeren aus Vinylpyrrolidon (VP) und Vinylacetat(VAc) mit hoher Viskosität, hergestellt durch Fällungspolymerisation in einem organischen Lösungsmittel, vorzugsweise Heptan, Hexan oder Cyclohexan. Die Monomere werden in einem VP/VAc-Verhältnis von 90/10 bis 60/40 polymerisiert. Vernetzer werden in Mengen von 0,1 bis 2 Gew.-%, bezogen auf Monomere, verwendet. Die beschriebenen Polymere können in pharmazeutischen Applikationen, wie z. B. in der kontrollierten Freisetzung von Wirkstoffen aus Tabletten, verwendet werden. Ungünstig bei diesem Verfahren ist insbesondere die Verwendung von sehr leicht entzündlichen organischen Lösungsmitteln, welche sich verfahrenstechnisch nur schwer vom Produkt abtrennen lassen.

In der US-A-5 395 904 wird ein Verfahren zur Herstellung von homogenen Copolymeren aus Vinylpyrrolidon und Vinylacetat beschrieben, die klare wässrige Lösungen bilden. Dazu werden die Monomere in einem bestimmten Verhältnis vorgelegt und getrennt in einer ihrer Reaktivität entsprechenden Zeit dem Reaktionsmedium zugeführt. Als Lösungsmittel wird entweder Alkohol oder ein Wasser/ Alkohol-Gemisch verwendet, das bis zu 50 Gew.-% Wasser enthält. Die so erhaltenen Polymere besitzen geringe K-Werte zwischen 10 und 40. Hohe Molekulargewichte können wegen der Verwendung der regelnden Alkohole nicht erzielt werden. Eine pH-Wertregelung zur Steuerung des K-Werts ist ebenfalls nicht vorgesehen.

Die US-A-3 166 525 erwähnt ein Verfahren zur Copolymerisation von N-Vinylpyrrolidon und Vinylestern von Säuren und Fettsäuren in Wasser, wobei die gesamte Monomermenge in der Reaktionslösung vorgelegt wird. Die auf diese Weise erhaltenen Polymere besitzen zwar höhere K-Werte (bis zu 55) als Polymere, die auf gleiche Weise in organischen Lösemitteln hergestellt wurden, die aber für bestimmte Anwendungen immer noch zu gering sind. K-Werte nach Fikentscher oberhalb von 55 werden mit diesem Verfahren nicht erreicht. Eine gezielte Steuerung des pH-Wertverlaufs über die Gesamtreaktionsdauer zur Erreichung höherer K-Werte ist nicht erwähnt.

Schließlich beschreibt die DE-A-197 12 247 ein Verfahren zur radikalischen wässrigen Emulsionspolymerisation von wasserlöslichen, N-Vinylgruppen-enthaltenden Monomeren wie z. B. N-Vinylpyrrolidon mit hydrophoben Monomeren wie z. B. Vinylacetat. Nachteil dieses Verfahrens ist der relativ hohe Restmonomergehalt an Vinylpyrrolidon, der in den Beispielen im Allgemeinen deutlich oberhalb von 50 ppm liegt und Werte bis zu 2 000 ppm N-Vinylpyrrolidon (Beispiele 13 und 14) erreichen kann. K-Werte nach Fikentscher von mehr als 100 werden mit diesem Verfahren ebenfalls nicht erreicht. Eine gezielte Steuerung des pH-Wertverlaufs über die gesamte Reaktionsdauer ist hierbei ebenfalls nicht vorgesehen. Vielmehr soll der pH-Wert über die Dauer der Reaktion konstantgehalten werden.

Aufgabe der vorliegenden Erfindung ist die Bereitstellung eines Verfahrens zur Herstellung wässriger Dispersionen hochmolekularer Copolymerisate aus hydrophilen und hydrophoben Monomeren mit unterschiedlichem Reaktionsverhalten in unterschiedlichen pH-Wertbereichen. Die erhaltenen Produkte sollen einen geringen Restmonomerengehalt und hohe K-Werte nach Fikentscher aufweisen.

Es wurde nun überraschenderweise gefunden, dass die erfindungsgemäße Aufgabe gelöst wird, wenn die Polymerisation in wässriger Lösung als radikalische Polymerisation mit einem wasserlöslichen Initiatorsystem durchgeführt und dabei der pH-Wert des Reaktionsmediums so gesteuert wird, dass er während der Reaktion abgesenkt wird.

Dementsprechend betrifft die vorliegende Erfindung ein Verfahren zur Herstellung einer wässrigen Copolymerisatdispersion durch radikalische Polymerisation ethylenisch ungesättigter Monomere in wässrigem Medium, welches enthält:
(a) 10 bis 90 Gew.-% mindestens eines vorzugsweise nichtionischen, hydrophilen, stickstoffhaltigen Monomers A, das eine N-Vinylgruppe aufweist und dessen Polymerisationsgeschwindigkeit bei pH-Werten oberhalb von 7 ein Maximum besitzt;
(b) 10 bis 90 Gew.-% mindestens eines monoethylenisch ungesättigten hydrophoben Monomers B, dessen Polymerisationsgeschwindigkeit bei pE-werten unterhalb von 7 ein Maximum besitzt;
(c) 0,01 bis 20 Gew.-%, bezogen auf die gesamten in dem Reaktionsmedium vorhandenen Monomere, mindestens eines wasserlöslichen oder wasserunlöslichen radikalischen Initiators oder eines Gemisches von wasserlöslichen mit wasserunlöslichen radikalischen Initiatoren,
wobei man im Verlauf der Polymerisationsreaktion den pH-Wert derart steuert, dass er im Verlauf der Polymerisation zwischen Anfang und Ende der Reaktion um 2 bis 5 Einheiten abnimmt. Der Restmonomerengehalt in der resultierenden Copolymerisatdispersion nach Beendigung der Polymerisationsreaktion beträgt dann höchstens 50 ppm beträgt.

Erfindungsgemäß wird die Polymerisationsreaktion so geführt bzw. gesteuert, dass die pH-Wertabnahme im Verlauf der Polymerisation, d. h. zwischen Anfang und Ende der Reaktion, 2 bis 5 pH-Werteinheiten, vorzugsweise 2,5 bis 4,5 pH-Werteinheiten, insbesondere 3 bis 4 pH-Werteinheiten, beträgt. Die pH-Wertabsenkung erfolgt somit während der Polymerisation und nicht erst nachträglich nach beendeter Polymerisation (unter beendeter Polymerisation ist hier ein Umsetzungsgrad von mindestens 90 % der eingesetzten Monomere zu verstehen).

Im Allgemeinen liegt der pH-Wert des Reaktionsmediums am Anfang der Polymerisationsreaktion im Bereich von 6 bis 10, vorzugsweise 7 bis 9, insbesondere 7 bis 8.

Am Ende der Polymerisationsreaktion liegt der pH-Wert im Allgemeinen im Bereich von 2 bis 6,5, vorzugsweise 3 bis 5, insbesondere zwischen 4 bis 5.

Die pH-Wertabsenkung kann durch Zugabe von geeigneten Basen, Säuren und/oder Puffersystemen gesteuert werden. Hierdurch kann im Allgemeinen eine gezielte pH-Wertsteuerung erfolgen.

Die Zugabe oder Zudosierung geeigneter Base(n), Säure(n) und/oder Puffersystem(e) kann kontinuierlich, diskontinuierlich, in Stufen, als Gradient oder auf eine andere mögliche Art und Weise erfolgen. Die Zugabe oder Zudosierung erfolgt im Allgemeinen vor und/oder während der Polymerisationsreaktion, d. h. zur Steuerung des pH-Wertes des Reaktionsmediums können die Base(n), Säure(n) und/oder Puffersystem(e) im Reaktionsmedium vorgelegt werden und/oder während der Polymerisation zudosiert werden. Beispielsweise kann die Zugabe der Säure(n) bzw. Base(n) oder des Puffersystems kontinuierlich während der Zugabe der Monomere erfolgen oder aber auch stufenweise (in mehreren Portionen) oder in einer Portion.

Damit der pH-Wert am Anfang der Polymerisation nicht plötzlich auf den gewünschten Endwert abfällt, was einem nicht gewollten Verlauf der Polymerisation entspräche, werden dem Polymerisationsmedium geeignete Basen zugesetzt. Die Zugabe kann kontinuierlich, diskontinuierlich, als Gradient oder in Stufen erfolgen.

Erfindungsgemäß geeignete Basen (Laugen) sind insbesondere Alkalimetallhydroxide, z. B. NaOH oder KOH, Erdalkalimetallhydroxide oder Ammoniak.

In einer bevorzugten Ausführungsform des erfindungsgemäßen Verfahrens wird dem Reaktionsmedium vor und/oder während der Polymerisation als alkalische Komponente bzw. Base Natron- oder Kalilauge oder eine Ammoniaklösung zugegeben. Insbesondere geeignet sind verdünnte Lösungen mit einem Basengehalt von insbesondere 1 bis 20 Gew.-%. Gleichermaßen geeignet sind basische Puffersysteme wie z. B. Kaliumhydrogenphosphat, Di-Natriumhydrogenphosphat, Natriumtetraborat/HCl, Natriumtetraborat/NaOH, Glycin/NaOH etc.

Fällt der pH-Wert während des Polymerisationsverlaufs nicht auf den gewünschten pH Endwert ab, so können dem Polymerisationsmedium geeignete Säuren zugesetzt werden. Die Zugabe kann kontinuierlich, diskontinuierlich, als Gradient oder in Stufen erfolgen.

Erfindungsgemäß geeignete Säuren sind insbesondere Mineralsäuren, wie z. B. Salzsäure oder Schwefelsäure, oder organische Säuren, z. B. organische Sulfonsäuren wie para-Toluolsulfonsäure.

In einer bevorzugten Ausführungsform werden bei der Polymerisation saure und/oder protonenabspaltende Polymerisationsinitiatoren verwendet, die gleichzeitig als Initiatoren und als Säurekomponente wirken. Nähere Angaben hierzu erfolgen unten im Zusammenhang mit den Polymerisationsinitiatoren.

Ferner können zur Steuerung des pH-Wertes geeignete Puffersysteme verwendet werden. Diese werden im Reaktionsmedium vorgelegt und/oder während der Polymerisation zudosiert. Geeignete Puffersysteme sind beispielsweise der Ammoniumhydrogencarbonat-, Hydrogenphosphat-, Borat-, Acetat-, Citrat-, Succinat-, Glycinat- oder Phthalatpuffer.

Die hydrophilen Monomere A, die eine N-Vinylgruppe aufweisen und deren Polymerisationsgeschwindigkeit bei pH-Werten oberhalb von 7 ein Maximum besitzt, sind vorzugsweise ausgewählt unter (i) N-Vinyllactamen, insbesondere solchen mit 5 bis 7 Kohlenstoffatomen (so z. B. N-Vinylpyrrolidon, N-Vinylpiperidon und N-Vinylcaprolactam); (ii) acyclischen N-Vinylcarbonsäureamiden, insbesondere solchen mit 3 bis 6 Kohlenstoffatomen (so z. B. N-Vinylformamid und N Methyl-N-vinylacetamid); (iii) N-Vinylimidazolen und deren quaternierten Derivaten (so z. B. N-Vinylimidazol).

Das oder die Monomere A werden in Mengen von 10 bis 90 Gew.-% eingesetzt, vorzugsweise in Mengen von 15 bis 70 Gew.-%, insbesondere in Mengen von 20 bis 50 Gew.-%, jeweils bezogen auf die gesamte Monomerenmenge.

Als monoethylenisch ungesättigte hydrophobe Monomere B, deren Polymerisationsgeschwindigkeit bei pH-Werten unterhalb von 7 ein Maximum besitzt, kommen erfindungsgemäß alle Verbindungen in Betracht, die dem Reaktionsmedium so zudosiert werden können, dass sie im Reaktionsmedium noch löslich sind.

Vorzugsweise sind die Monomere B ausgewählt aus Estern monoethylenisch ungesättigter Carbonsäuren, insbesondere aus C₁-C₁₀-Alkylestern monoethylenisch ungesättigter C₃-C₆-Carbonsäuren und C₄-C₈-Dicarbonsäuren, wie Acrylsäure, Methacrylsäure, Crotonsäure, 2-Ethylpropensäure, Itaconsäure, Maleinsäure, Citraconsäure und Fumarsäure. Insbesondere bevorzugt sind die Ester der Acrylsäure und der Methacrylsäure mit C₁-C₈-Alkanolen, wie z. B. Methylmethacrylat, Ethylacrylat, n-Butylacrylat und 2-Ethylhexylacrylat. Ebenfalls geeignet sind die Halbester der zuvor genannten, monoethylenisch ungesättigten Dicarbonsäuren mit C₁-C₈-Alkanolen.

Darüber hinaus kommen als Monomer B auch Vinylaromaten, wie Styrol, in Betracht.

Insbesondere geeignet als Monomere B sind auch die Vinylester von C₁-C₂₂-Carbonsäuren, vorzugsweise Vinylacetat, und Vinylpropionat.

Das oder die Monomere B werden in Mengen von 10 bis 90 Gew.-% eingesetzt, vorzugsweise in Mengen von 85 bis 30 Gew.-%, insbesondere in Mengen von 80 bis 50 Gew.-%, jeweils bezogen auf die gesamte Monomerenmenge.

Bei dem erfindungsgemäßen Verfahren kann das zu copolymerisierende Reaktionsgemisch gegebenenfalls 0,1 bis 20 Gew.-%, vorzugsweise 0,5 bis 10 Gew.-%, insbesondere 0,5 bis 8 Gew.-%, mindestens eines weiteren monoethylenisch ungesättigten Monomers C aufweisen.

Als Monomere C kommen erfindungsgemäß neutrale, wasserlösliche Monomere, insbesondere die folgenden Verbindungen in Betracht:
i) ethylenisch ungesättigte C₃-C₆-Monocarbonsäuren und C₄-C₈-Dicarbonsäuren, wie Acrylsäure, Methacrylsäure, Crotonsäure, Itaconsäure, Maleinsäure, Citraconsäure und Fumarsäure;
ii) ethylenisch ungesättigte Sulfonsäuren und Phosphonsäuren, wie vinylsulfonsäure, Styrolsulfonsäure, 2-Acrylamido-3-methyl-propansulfonsäure und Vinylphosphonsäure;
iii) Acrylamid, Methacrylamid sowie die N-Mono-C₁-C₄-alkyl- und N,N-Di-C₁-C₄-alkylderivate davon; und
iv) Hydroxy-C₁-C₆-alkylester und -halbester der unter i) genannten C₃-C₆-Mono- und C₄-C₈-Dicarbonsäuren.

Weiterhin können die erfindungsgemäßen Copolymerisatdispersionen unter Verwendung sogenannter vernetzender Monomere D hergestellt werden. Hierbei handelt es sich um ethylenisch zweifach ungesättigte nicht konjugierte Monomere, insbesondere die Di- oder Polyester zweiwertiger oder höherwertiger Alkohole mit ethylenisch ungesättigten C₃-C₆-Carbonsäuren. Beispiele für derartige Verbindungen sind Alkylenglykoldiacrylate und Dimethacrylate wie Ethylenglykoldi(meth)acrylat, 1,3- oder 1,4-Butylenglykoldi(meth)acrylat, Diethylenglykoldi(meth)acrylat, 1,6-Hexandioldi(meth)acrylat, Neopentylglykoldi(meth)acrylat, Triethylenglykoldi(meth)acrylat, Tetraethylenglykoldi(meth)acrylat, 1,12-Dodecandioldi(meth)acrylat, Polyethylenglykoldi(meth)acrylat, 2,2-Bis(p-(meth)acryloxyphenyl)propan, Tripropylenglykoldi(meth)acrylat, Trimethylolpropantri(meth)acrylat, Pentaerythrittri(meth)acrylat oder Pentaerythrittetra(meth)acrylat. Weiterhin kommen als Monomere D die Vinyl-, Allyl- und Methallylester ethylenisch ungesättigter C₃-C₆-Carbonsäuren wie Vinyl(meth)acrylat, Allyl(meth)acrylat und Methallyl(meth)acrylat, die Vinyl-, Allyl- und Methallylester aliphatischer oder aromatischer Dicarbonsäuren wie Divinylphthalat oder Diallylphthalat, Divinylethylenharnstoff sowie Divinylaromaten, wie Divinylbenzol in Frage. Diese können in Mengen von 0,1 bis 10 Gew.-%, vorzugsweise 0,5 bis 5 Gew.-%, insbesondere 0,5 bis 2 Gew.-%, verwendet werden, jeweils bezogen auf die gesamte Monomerenmenge.

Die Polymerisation wird im Allgemeinen in Gegenwart mindestens eines radikalischen Initiators durchgeführt. Die Menge an radikalischem(n) Initiator(en) beträgt, bezogen auf die gesamte Monomerenmenge, im Allgemeinen 0,01 bis 20 Gew.-%, vorzugsweise 0,1 bis 10 Gew.-%, insbesondere 0,5 bis 5 Gew.-%.

Als Initiator werden wasserlösliche oder wasserunlösliche radikalische Initiatoren oder auch Gemische von wasserlöslichen mit wasserunlöslichen radikalischen Initiatoren verwendet.

So können als Initiatoren sowohl Peroxide, z. B. Alkalimetallperoxodisulfate, und Hydroperoxide als auch Azoverbindungen, z. B. die im Folgenden Genannten, verwendet werden.

Insbesondere kommen als radikalische Polymerisationsinitiatoren alle diejenigen in Betracht, die in der Lage sind, eine radikalische wässrige Emulsionspolymerisation auszulösen.

Es werden solche wassserlöslichen Initiatoren bevorzugt, deren Wasserlöslichkeit so groß ist, dass die verwendete Initiatormenge im jeweiligen Reaktionsmedium vollständig gelöst vorliegt. Bevorzugte Polymerisationsinitiatoren umfassen wasserlösliche Azoverbindungen wie 2,2'-Azobis-(2-(2-imidazolin-2-yl))-propan, 2,2'-Azobis-(2-amidinopropan) und deren Säureadditionssalze, insbesondere deren Hydrochloride, Acetate oder (Hydrogen)sulfate, 4,4'-Azobis-(4-cyanovaleriansäure) und deren Alkalimetall- oder Ammoniumsalze, insbesondere deren Natriumsalze, oder 2-(Carbamoylazo)-isobutyronitril.

Es werden auch kombinierte Systeme verwendet, die aus mindestens einem organischen Reduktionsmittel und wenigstens einem Peroxid und/oder Hydroperoxid zusammengesetzt sind, z. B. tert.-Butylhydroperoxid mit dem Natriumsalz der Hydroxymethansulfinsäure oder auch Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, so z. B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden.

Bevorzugte Initiatoren sind die Ammonium- oder Alkalimetallsalze von Peroxosulfaten oder Peroxodisulfaten, insbesondere Natrium- oder Kaliumperoxodisulfat.

In einer besonders bevorzugten Ausführungsform werden bei der Polymerisation saure und/oder protonenabspaltende Polymerisationsinitiatoren verwendet, die gleichzeitig zur Steuerung des pH-Wertes dienen. Als Beispiel für einen sauren Polymerisationsinitiator kann man insbesondere 2,2'-Azobis-(2-amidinopropan)-dihydrochlorid nennen. Beispiele für protonenabspaltende Polymerisationsinitiatoren sind insbesondere Peroxide und Hydroperoxide, so z. B. tert.-Butylhydroperoxid, tert.-Amylhydroperoxid, Cumolhydroperoxid, Pinanhydroperoxid, Peroxodischwefelsäure und ihre Salze, insbesondere ihre Alkalimetall- oder Ammoniumsalze, sowie Wasserstoffperoxid. Wie zuvor beschrieben, können die genannten Peroxide und Hydroperoxide entweder allein oder vorzugsweise mit einem Reduktionsmittel verwendet werden, so z. B. mit einem Salz der Hydroxymethansulfinsäure oder Ascorbinsäure oder einer Übergangsmetallverbindung, deren Übergangsmetall in wässriger Lösung in verschiedenen Oxidationsstufen vorliegen kann, beispielsweise Eisen(II)-Salzen oder Kupfer(II)-Salzen (sogenannte Redoxinitiatorsysteme).

Die Polymerisation kann auch durch energiereiche Strahlung, z. B. γ-Strahlung, initiiert werden oder im Sinne einer Photopolymerisation durchgeführt werden, d. h. durch Initiierung mit sichtbaren Licht oder UV-Licht in Gegenwart geeigneter Photoinitiatoren. Geeignete Photoinitiatoren umfassen insbesondere Derivate des Acetophenons, des Benzophenons oder des Thioxanthons.

Als Reaktionsmedium für die Copolymerisation dient Wasser. Das Reaktionsmedium kann darüber hinaus einen oder mehrere C₁-C₄-Alkohole, wie z. B. Methanol, Ethanol, n-Propanol, n-Butanol oder iso-Butanol, in Mengen von 0,1 bis zu 20 Gew.-%, vorzugsweise von 1 bis zu 10 Gew.-%, insbesondere von 1 bis zu 5 Gew.-%, enthalten.

Insbesondere bevorzugt wird Wasser als alleiniges Reaktionsmedium verwendet.

Die Herstellung der Copolymerisate erfolgt auf dem Wege einer wässrigen Lösungs- oder Emulsionspolymerisation nach einem Batch oder vorzugsweise nach einem Zulaufverfahren.

Die zu copolymerisierenden Monomere können im wässrigen Reaktionsmedium vorgelegt werden (Batch-Verfahren).

Vorzugsweise erfolgt die Polymerisation jedoch nach einem Zulaufverfahren. Unter einem Zulaufverfahren ist hier zu verstehen, dass nur ein geringer Teil der zu copolymerisierenden Monomere im Reaktionsgefäß vorgelegt wird und die Hauptmenge, vorzugsweise mindestens 80 Gew.-%, besonders bevorzugt mindestens 90 Gew.-%, insbesondere mindestens 95 Gew.-%, der zu copolymerisierenden Monomere, gegebenenfalls als wässrige oder wässrig-alkoholische Lösung oder als wässrige Emulsion, dem Polymerisationsansatz zudosiert, und zwar entweder kontinuierlich mit gleichbleibender oder zunehmender Zulaufrate oder stufenweise zu der Polymerisationsreaktion.

Die Art und Weise, wie der Initiator der Polymerisation zudosiert wird, ist nicht kritisch. Der Initiator kann sowohl vollständig im Polymerisationsgefäß vorgelegt oder aber nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab und kann vom Fachmann je nach Bedarf gewählt werden. Vorzugsweise erfolgt die Zugabe des Initiators kontinuierlich und parallel zur Zugabe der Monomere.

Die Polymerisationsreaktion wird vorzugsweise gestartet, indem man wenigstens einen Teil des Initiators in das bei Reaktionstemperatur befindliche Reaktionsgefäß gibt. Hierbei kann das Reaktionsgefäß neben Wasser ein Ausgangspolymerisat, Emulgator und gegebenenfalls auch einen Teil der Monomere enthalten. Vorzugsweise ist die Vorlage jedoch frei von Monomeren. Ebenfalls ist es möglich, wenigstens einen Teil des Initiators im Reaktionsgefäß zusammen mit Wasser, gegebenenfalls einem Teil des Emulgators und gegebenenfalls einem Ausgangspolymerisat vorzulegen, die Vorlage auf Reaktionstemperatur zu erwärmen und anschließend die Monomere zuzugeben.

Ganz besonders bevorzugt werden Teilmengen der Monomere und des Initiators im wässrigen oder wässrig-alkoholischen Reaktionsmedium vorgelegt und auf Reaktionstemperatur gebracht.

Die Zugabe der Monomere erfolgt in der Regel über einen Zeitraum von 0,5 bis 14 Stunden, vorzugsweise innerhalb von 1 bis 12 Stunden, insbesondere innerhalb von 2 bis 10 Stunden. Die Zugabe des Initiators erstreckt sich über einen gleichen oder längeren Zeitraum.

Im Allgemeinen arbeitet man bei Temperaturen zwischen Raumtemperatur und 100 °C, vorzugsweise bei Temperaturen von 50 bis 95°C, insbesondere bei Temperaturen von 60 bis 90 °C. Die Reaktionstemperatur kann jedoch auch bis zu 130 °C betragen.

Die Umsetzung kann bei Normaldruck oder bei Anwendung höherer Temperaturen unter Eigendampfdruck oder unter Schutzgasüberdruck durchgeführt werden. Als Schutzgas kommt insbesondere Stickstoff in Betracht. Die Anwendung von erhöhtem oder vermindertem Druck ist ebenfalls möglich, so dass die Polymerisationstemperatur auch 100°C überschreiten und bis zu 130°C betragen kann. Vorzugsweise werden leicht flüchtige Monomere unter erhöhtem Druck polymerisiert.

Zur Stabilisierung der Dispersionen wird das erfindungsgemäße Verfahren gegebenenfalls unter Verwendung grenz- oder oberflächenaktiver Substanzen, d. h. Emulgatoren und/oder Schutzkolloiden, durchgeführt. Hierbei handelt es sich um solche grenz- oder oberflächenaktive Substanzen, die sich für die Durchführung der Emulsionspolymerisation eignen. Dies sind die üblicherweise für diese Zwecke eingesetzten Schutzkolloide und/oder Emulgatoren. In einer Ausführungsform der vorliegenden Erfindung werden keine seifenbildenden Carbonsäuren, wie Harzsäuren, verwendet. Die grenzflächenaktiven Substanzen werden üblicherweise in Mengen von bis zu 5 Gew.-%, vorzugsweise 0,2 bis 3 Gew.-%, insbesondere 0,5 bis 2 Gew.-%, bezogen auf die zu copolymerisierenden Monomere, verwendet.

Geeignete Schutzkolloide sind beispielsweise Polyvinylalkohole, Polysaccharide wie Stärken, Stärkederivate oder Cellulosederivate oder Vinylpyrrolidon enthaltende Copolymerisate. Eine ausführliche Beschreibung weiterer geeigneter Schutzkolloide findet sich in Houben-Weyl, Methoden der Organischen Chemie, Band XIV/l, Makromolekulare Stoffe, Georg-Thieme-Verlag, Stuttgart, 1961, S. 411-420. Auch Gemische aus Emulgatoren und/oder Schutzkolloiden können verwendet werden. Vorzugsweise werden als grenzflächenaktive Substanzen Emulgatoren eingesetzt, deren relative Molekulargewichte im Unterschied zu den Schutzkolloiden üblicherweise unter 2 000 Dalton liegen. Sie können sowohl anionischer, kationischer als auch nichtionischer Natur sein.

Brauchbare nichtionische Emulgatoren sind araliphatische oder aliphatische nichtionische Emulgatoren, beispielsweise ethoxylierte Mono-, Di- und Trialkylphenole (EO Grad: 3 bis 50, Alkylrest: C₄-C₁₀), Ethoxylate langkettiger Alkohole (EO Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad von 10 bis 50 sowie ethoxylierte Monoalkylphenole verwendet.

Geeignete anionische Emulgatoren sind beispielsweise Alkali- und Ammoniumsalze von Alkylsulfaten (Alkylrest: C₈-C₁₂), von Schwefelsäurehalbestern ethoxylierter Alkanole (EO Grad: 2 bis 50, Alkylrest: C₁₂-C₁₈) und ethoxylierter Alkylphenole (EO Grad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der Organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus der US-A-4 269 -749 und im Handel erhältlich, beispielsweise als Dowfax® 2A1 (Warenzeichen der Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-C₆-C₂₀-Alkylpyridinen, -morpholinen oder -imidazolen, z. B. N-Laurylpyridiniumchlorid.

Vorzugsweise erfolgt im Anschluss an die eigentliche Polymerisation eine sogenannte Nachpolymerisation zur Vervollständigung des Monomerenumsatzes. Hierunter ist zu verstehen, dass man im Anschluss an die Zugabe der Monomere und des Polymerisationsinitiators dem Polymerisationsansatz bzw. dem Reaktionsmedium weitere, Radikale bildende Initiatoren zuführt und gegebenenfalls die Temperatur der Reaktionsmischung auf Temperaturen oberhalb der eigentlichen Polymerisationstemperatur erhöht.

Geeignete Initiatoren für die Nachpolymerisation sind die oben angegebenen Initiatoren sowie Percarbonate oder Peroxoester.

Die genannten Peroxide bzw. Hydroperoxide werden vorzugsweise zusammen mit einem Reduktionsmittel und/oder einem Übergangsmetall eingesetzt, wie dies zuvor beschrieben worden ist.

Die Nachpolymerisation schließt sich in der Regel direkt oder innerhalb eines Zeitraums von bis zu 4 Stunden nach Beendigung der letzten Zugabe an Monomeren und Initiator an.

Der für die Nachpolymerisation erforderliche Initiator kann auf einmal oder über einen Zeitraum von bis zu 10 Stunden zugegeben werden. Auch ist es möglich, für die Nachpolymerisation mehrere Initiatoren zuzugeben.

Die erhaltenen Dispersionen können im Anschluss an die Polymerisation, gegebenenfalls anstelle einer Nachpolymerisation, einer physikalischen Nachbehandlung, beispielsweise einer Wasserdampfdestillation oder Strippen mit einem inerten Gas, beispielsweise Stickstoff, unterworfen werden. Hierdurch werden mit Wasserdampf flüchtige Verunreinigungen, beispielsweise Restmonomere, aus der Dispersion entfernt.

Das erfindungsgemäße Verfahren führt zu wässrigen Copolymerisatdispersionen, deren Restmonomerengehalt höchstens 50 ppm, vorzugsweise höchstens 30 ppm, insbesondere höchstens 20 ppm, beträgt.

Die durch das erfindungsgemäße Polymerisationsverfahren erhaltenen Copolymerisate weisen in der Regel sehr hohe Molekulargewichte auf, die sich durch die K-Werte nach Fikentscher (Cellulosechemie, 13, S. 60 (1932) ausdrücken lassen. Diese liegen bei mindestens etwa 40, vorzugsweise bei mindestens etwa 80, insbesondere bei mindestens etwa 100 (1%ig in Ethanol oder Ethanol/Wasser 1:1). Die Obergrenze der K-Werte liegt im Allgemeinen bei 250, insbesondere bei 200 und besonders bevorzugt bei 180.

Sind niedrigere Molekulargewichte erwünscht, können diese durch Zusatz eines Reglers zum Polymerisationsansatz eingestellt werden.

Als Regler eignen sich insbesondere die folgenden Verbindungen: Aldehyde wie Formaldehyd, Acetaldehyd, Propionaldehyd, n-Butyraldehyd und Isobutyraldehyd; Ameisensäure; Ammoniumformiat; Hydroxylammoniumsulfat und Hydroxylammoniumphosphat. Weiterhin können Regler eingesetzt werden, die Schwefel in organisch gebundener Form enthalten. Hierbei handelt es sich beispielsweise um Di-n-butylsulfid, Di-n-octylsulfid, Diphenylsulfid, Diisopropyldisulfid, Di-n-butyldisulfid, Di-n-hexyldisulfid, Diacetyldisulfid und Di-tert.-butyltrisulfid. Insbesondere enthalten die Regler Schwefel in der Form von SH Gruppen. Beispiele für solche Regler sind n-Butylmercaptan, n-Hexylmercaptan oder Dodecylmercaptan. In Betracht kommen auch wasserlösliche schwefelhaltige Polymerisationsregler, wie beispielsweise Hydrogensulfite, Disulfite und Verbindungen wie Ethylthioglykolat, Cystein, 2-Mercaptoethanol, 3-Mercaptopropanol, 3-Mercaptopropan-1,2-diol, Mercaptoessigsäure, 3-Mercaptopropionsäure, Mercaptobernsteinsäure, Thioglycerin, Diethanolsulfid, Thiodiglykol, Ethylthioethanol, Thioharnstoff und Dimethylsulfoxid. Weiterhin als Regler geeignet sind Allylverbindungen wie Allylalkohol oder Allylbromid, Benzylverbindungen wie Benzylbromid oder Alkylhalogenide wie Chloroform, Bromtrichlormethan oder Tetrachlormethan.

Der Regler kann beispielsweise, gegebenenfalls als Lösung in Wasser und/oder einem C₁-C₄-Alkohol, dem Reaktionsansatz zudosiert werden.

Die durch das erfindungsgemäße Polymerisationsverfahren herstellbaren wässrigen Copolymerisatdispersionen und die daraus erhältlichen Copolymerisate finden breite Anwendung auf vielen technischen Gebieten. So können sie beispielsweise als Hilfsstoffe für pharmazeutische, kosmetische oder agrochemische Zubereitungen verwendet werden; sie können aber auch zur Herstellung von Anstrich- und Beschichtungsmitteln sowie Leimen und Klebstoffen verwendet werden.

Die nachfolgenden Beispiele erläutern die Erfindung, ohne sie zu beschränken.

### Ausführungsbeispiele:

### Beispiel 1: Herstellung eines Vinylpyrrolidon/Vinylacetat-Copolymers (40 Gew.-%/60 Gew.-%)

In einer mit Stickstoff gespülten Reaktionsapparatur werden in 1300 g Wasser ein Gemisch aus 36 g Vinylpyrrolidon, 54 g Vinylacetat und 6,7 g einer wässrigen 1%-igen 2,2'-Azobis-(2-amidinopropan)-dihydrochlorid-Lösung vorgelegt und mit einer Boratpufferlösung auf einen pH-Wert von etwa 9,0 eingestellt. Anschließend wird das ganze auf 70 °C erhitzt. Dann werden über getrennte Zuläufe 124 g Vinylpyrrolidon (VP) in 8 Stunden, 186 g Vinylacetat in 7 Stunden und 124 g der oben genannten Initiatorlösung in 9 Stunden zugetropft. Zur Nachpolymerisation werden 131,3 g der oben genannten Initiatorlösung bei 75 °C innerhalb von 6 Stunden hinzugegeben.

Man erhält eine milchige Dispersion mit einem pH-Wert von 4,8. Der K-Wert beträgt 76 (1%ig in Ethanol/Wasser 1:1). Der Gehalt an Restmonomeren liegt bei 35 ppm Vinylpyrrolidon.

Die folgende Tabelle 1 zeigt die pH-Wertveränderung während der Polymerisation.

**Tabelle 1**

| Probe | Zeit [min] | pH-Wert |
|---|---|---|
| 1 | 0 | 8,9 |
| 2 | 70 | 5,4 |
| 3 | 130 | 4,9 |
| 4 | 190 | 4,9 |
| 5 | 250 | 5,0 |
| 6 | 310 | 4,9 |
| 7 | 370 | 4,9 |
| 8 | 430 | 4,8 |
| 9 | 490 | 4,8 |
| 10 | 550 | 4,8 |
| 11 | 610 | 4,8 |

### Beispiel 2: Herstellung eines Vinylpyrrolidon/Vinylacetat-Copolymers (30 Gew.-%/70 Gew.-%)

In einer mit Stickstoff gespülten Reaktionsapparatur werden in 1300 g Wasser ein Gemisch aus 27 g Vinylpyrrolidon, 63 g Vinylacetat und 6,7 g einer wässrigen 1%-igen 2,2' Azobis-(2-amidinopropan)-dihydrochlorid-Lösung vorgelegt und mit 2,5%-iger Natronlauge auf einen pH-Wert von 8,6 eingestellt. Anschließend wird das ganze auf 70 °C erhitzt.

Dann werden über getrennte Zuläufe 93 g Vinylpyrrolidon (VP) in 8 Stunden, 217 g Vinylacetat in 7 Stunden und 124,6 g der oben genannten Initiatorlösung in 9 Stunden zugetropft. Während der Polymerisation wird der fallende pH-Wert mit 19 g einer 2,5%-igen Natronlauge kontinuierlich nachgeregelt. Zur Nachpolymerisation werden 131,3 g der oben genannten Initiatorlösung bei 75 °C innerhalb von 6 Stunden zugegeben. Man erhält eine milchige Dispersion mit einem pH-Wert von 4,2.

| | |
|---|---|
| Restmonomere | 26 ppm Vinylpyrrolidon |
| K-Wert | 59 (1%ig in Ethanol/Wasser 1:1) |

Die folgende Tabelle 2 zeigt die pH-Wertveränderung während der Polymerisation.

**Tabelle 2**

| Probe | Zeit [min] | pH-Wert |
|---|---|---|
| 1 | 0 | 8,6 |
| 2 | 60 | 4,8 |
| 3 | 120 | 4,8 |
| 4 | 180 | 4,4 |
| 5 | 240 | 4,4 |
| 6 | 270 | 4,3 |
| 7 | 375 | 4,3 |
| 8 | 480 | 4,2 |

### Beispiel 3: Herstellung eines Vinylpyrrolidon/Vinylacetat-Copolymers (30 Gew.-%/70 Gew.-%)

In einer mit Stickstoff gespülten Reaktionsapparatur werden in 1300 g Wasser ein Gemisch aus 27 g Vinylpyrrolidon, 63 g Vinylacetat und 6,7 g einer wässrigen 1%-igen 2,2'-Azobis-(2-amidinopropan)-dihydrochlorid-Lösung vorgelegt und mit einer 5%-igen Natronlauge auf einen pH-Wert von 9 eingestellt. Anschließend wird auf 70 °C erhitzt. Dann werden über getrennte Zuläufe 93 g Vinylpyrrolidon in 8 Stunden, 217 g Vinylacetat in 7 Stunden und 124,6 g der oben genannten Initiatorlösung in 9 Stunden zugetropft. Während der Polymerisation wird der fallende pH-Wert mit 20 g 5%-iger Natronlauge portionsweise nachgeregelt. Zur Nachpolymerisation werden 131,3 g der oben genannten Initiatorlösung bei 75 °C innerhalb von 6 Stunden zugegeben. Man erhält eine milchige Dispersion mit einem pH-Wert von 5,4.

| | |
|---|---|
| K-Wert | 216 (1%ig in Ethanol) |
| K-Wert | 84 (0,5%ig in Aceton) |

### Beispiel 4: Herstellung eines Vinylpyrrolidon/Vinylacetat-Copolymers (50 Gew.-%/50 Gew.-%)

In einer mit Stickstoff gespülten Reaktionsapparatur werden in 1300 g Wasser ein Gemisch aus 45 g Vinylpyrrolidon, 45 g Vinylacetat und 6,7 g einer wässrigen 1%-igen 2,2'-Azobis-(2-amidinopropan)-dihydrochlorid-Lösung vorgelegt und mit einer 5%-igen Natronlauge auf einen pH-Wert von 9,6 eingestellt. Anschließend wird auf 70 °C aufgeheizt. Dann werden über getrennte Zuläufe 155 g Vinylpyrrolidon in 8 stunden, 155 g Vinylacetat in 7 Stunden und 124,6 g der oben genannten Initiatorlösung in 9 Stunden hinzugetropft. Während der Polymerisation wird der fallende pH-Wert mit 20 g einer 5%-igen Natronlauge portionsweise nachgeregelt. Zur Nachpolymerisation werden 131,3 g der oben genannten Initiatorlösung bei 75 °C innerhalb von 6 Stunden zugegeben. Man erhält eine milchige Dispersion mit einem pH-Wert von 4,5.

| | |
|---|---|
| K-Wert | 75 (0,5%ig in Aceton) |
| Restmonomere | 22 ppm Vinylpyrrolidon |

### Beispiel 5: Vergleichsbeispiel

### Herstellung eines Vinylpyrrolidon/Vinylacetat-Copolymers (35 Gew.-%/65 Gew.-%) in Alkohol

In einer mit Stickstoff gespülten Reaktionsapparatur werden in 690 g n-Propanol ein Gemisch aus 31,5 g Vinylpyrrolidon und 58,5 g Vinylacetat vorgelegt. Anschließend wird auf 75 °C erhitzt. Dann werden über getrennte Zuläufe 108,5 g Vinylpyrrolidon in 5 Stunden, 201,5 g Vinylacetat in 4 Stunden und 121,6 g tert.-Butylperoxypivalat (75%ig) in 6 Stunden zugetropft. Zur Nachpolymerisation werden 121,6 g der oben genannten Initiatorlösung bei 75 °C innerhalb von 4 Stunden zugegeben. Nach Austausch des Lösungsmittels gegen Wasser erhält man eine milchige Dispersion.

| | |
|---|---|
| K-Wert | 33 (1%ig in Ethanol) |
| Restmonomere | 141 ppm Vinylpyrrolidon |

### Beispiel 6: Vergleichsbeispiele

### Polymerisation ohne pH-Wert-Steuerung

**Tabelle 3**

| Restmonomerengehalt nach Polymerisation: | | | |
|---|---|---|---|
| Referenz | Bsp. | Zusammensetzung | Restmonomerengehalt |
| DE-A-197 12 247: | 1 | VP/VAc 30/70 | 130 ppm VP |
| | 2 | VP/VAc 30/70 | 70 ppm VP |
| | 3 | VP/VAc 30/70 | 550 ppm VP |
| | 4 | VP/VAc 30/70 | 550 ppm VP |
| | 5 | VP/VAc 20/80 | 200 ppm VP |
| Erfindung: | 1 | VP/VAc 40/60 | 35 ppm VP |
| | 2 | VP/VAc 30/70 | 26 ppm VP |
| | 4 | VP/VAc 50/50 | 22 ppm VP |

### Beispiel 7: Copolymer N-Vinylformamid/Vinylacetat 30/70 Gew.-%

In einer mit Stickstoff gespülten Reaktionsapparatur werden in 1300 g Wasser ein Gemisch aus 27 g Vinylformamid, 63 g Vinylacetat und 6,7 g einer wässrigen 1%-igen 2,2'-Azobis-(2-amidinopropan)-dihydrochlorid-Lösung vorgelegt und mit einer 5%-igen Natronlauge auf einen pH 8,6 gestellt. Anschließend wird auf 70 °C geheizt. Dann werden über getrennte zuläufe 93 g N-Vinylformamid in 8 Stunden, 217 g Vinylacetat in 7 Stunden und 130 g der Initiatorlösung in 9 Stunden hinzugetropft. Während der Polymerisation wird der fallende pH-Wert mit 20 g einer 5%-igen Natronlauge kontinuierlich nachgeregelt. Zur Nachpolymerisation werden 131,3 g der 1%-igen Initiatorlösung bei 75 °C innerhalb von 6 Stunden zugegeben. Man erhält eine milchige Dispersion mit einem pH-Wert von 4,8.

| pH-Wert-Tabelle: | | |
|---|---|---|
| Probe | Zeit [min] | pH-Wert |
| 1 | 0 | 10,4 |
| 2 | 60 | 6,0 |
| 3 | 120 | 5,4 |
| 4 | 180 | 5,3 |
| 5 | 240 | 5,2 |
| 6 | 270 | 4,8 |
| 7 | 375 | 4,8 |
| 8 | 480 | 4,8 |

## Patentansprüche

1. Verfahren zur Herstellung einer wässrigen Copolymerisatdispersion durch radikalische Polymerisation ethylenisch ungesättigter Monomere in wässrigem Medium, enthaltend
(a) 10 bis 90 Gew.-% mindestens eines hydrophilen Monomers A, das eine N-Vinylgruppe aufweist und dessen Polymerisationsgeschwindigkeit bei pH-Werten oberhalb von 7 ein Maximum besitzt;
(b) 10 bis 90 Gew.-% mindestens eines monoethylenisch ungesättigten hydrophoben Monomers B, dessen Polymerisationsgeschwindigkeit bei pH-Werten unterhalb von 7 ein Maximum besitzt;
(c) 0,01 bis 20 Gew.-%, bezogen auf die gesamten in der Lösung vorhandenen Monomere, mindestens eines wasserlöslichen oder wasserunlöslichen radikalischen Starters oder eines Gemisches von wasserlöslichen mit wasserunlöslichen radikalischen Startern;
**dadurch gekennzeichnet, dass** man im Verlauf der Polymerisationsreaktion den pH-Wert derart steuert, dass der pH-Wert im Verlauf der Polymerisation zwischen Anfang und Ende der Reaktion um 2 bis 5 Einheiten abnimmt.

2. Verfahren nach Anspruch 1, **dadurch gekennzeichnet, dass** die pH-Wertabnahme im Verlauf der Polymerisationsreaktion 2,5 bis 4,5 Einheiten, insbesondere 3 bis 4 Einheiten, beträgt.

3. Verfahren nach einem der Ansprüche 1 oder 2, **dadurch gekennzeichnet, dass** der pH-Wert am Anfang der Reaktion im Bereich von 6 bis 10, vorzugsweise 7 bis 9, insbesondere 7 bis 8, liegt.

4. Verfahren nach Anspruch 1 bis 3, **dadurch gekennzeichnet, dass** der pH-Wert am Ende der Reaktion im Bereich von 2 bis 6,5, vorzugsweise im Bereich von 3 bis 5, insbesondere im Bereich von 4 bis 5, liegt.

5. Verfahren nach einem der Ansprüche 1 bis 4, **dadurch gekennzeichnet, dass** die pH-Wertabsenkung durch Zugabe von geeigneten Base(n), Säure(n) und/oder Puffersystem(en) gesteuert wird.

6. Verfahren nach Anspruch 5, **dadurch gekennzeichnet, dass** als Säure (saure Komponente) ein saurer Polymerisationsinitiator verwendet wird.

7. Verfahren nach einem der Ansprüche 1 bis 6, **dadurch gekennzeichnet, dass** das Monomer A ausgewählt ist unter N-Vinyllactamen mit 5 bis 7 Ringatomen; acyclischen N-Vinylcarbonsäureamiden mit 2 bis 6 Kohlenstoffatomen; und N-Vinylimidazolen und deren quaternierten Derivaten.

8. Verfahren nach Anspruch 7, **dadurch gekennzeichnet, dass** als N-Vinyllactam N-Vinylpiperidon, N-Vinylcaprolactam oder insbesondere N-Vinylpyrrolidon verwendet wird.

9. Verfahren nach einem der Ansprüche 1 bis 8, **dadurch gekennzeichnet, dass** das Monomer B ausgewählt ist unter Estern monoethylenisch ungesättigter C₃-C₆-Carbonsäuren; Styrol; und Vinylestern von C₁-C₂₂-Carbonsäuren.

10. Verfahren nach einem der Ansprüche 1 bis 9, **dadurch gekennzeichnet, dass** als Monomer B vinylacetat verwendet wird.

11. Verfahren nach einem der Ansprüche 1 bis 10, **dadurch gekennzeichnet, dass** das zu copolymerisierende Ausgangsgemisch außerdem 0,1 bis 20 Gew.-% eines weiteren monoethylenisch ungesättigten Monomers C und/oder 0,1 bis 10 Gew.-% eines Monomers D aufweist, das mindestens zwei ethylenisch ungesättigte Bindungen aufweist.

## Claims

1. A process for preparing an aqueous copolymer dispersion by free-radical polymerization of ethylenically unsaturated monomers in an aqueous medium comprising
(a) from 10 to 90% by weight of at least one hydrophilic monomer A which has an N-vinyl group and whose polymerization rate possesses a maximum at pH levels above 7;
(b) from 10 to 90% by weight of at least one monoethylenically unsaturated hydrophobic monomer B whose polymerization rate possesses a maximum at pH levels below 7;
(c) from 0.01 to 20% by weight, based on the total monomers present in the solution, of at least one water-soluble or water-insoluble free-radical initiator or of a mixture of water-soluble with water-insoluble free-radical initiators,
wherein the pH is controlled in the course of the polymerization reaction in such a way that in the course of the polymerization it decreases by from 2 to 5 units between start and finish of the reaction.

2. A process as claimed in claim 1, wherein the pH decrease in the course of the polymerization reaction is from 2.5 to 4.5 units, in particular from 3 to 4 units.

3. A process as claimed in either of claims 1 and 2, wherein the pH at the beginning of the reaction is within the range from 6 to 10, preferably from 7 to 9, in particular from 7 to 8.

4. A process as claimed in any of claims 1 to 3, wherein the pH at the end of the reaction lies within the range from 2 to 6.5, preferably in the range from 3 to 5, in particular in the range from 4 to 5.

5. A process as claimed in any of claims 1 to 4, wherein the pH reduction is controlled by adding suitable base(s), acid(s) and/or buffer system(s).

6. A process as claimed in claim 5, wherein an acidic polymerization initiator is used as acid (acidic component).

7. A process as claimed in any of claims 1 to 6, wherein the monomer A is selected from N-vinyllactams having 5 to 7 ring atoms; acylic N-vinylcarboximides having 2 to 6 carbon atoms; and N-vinylimidazoles and quaternized derivatives thereof.

8. A process as claimed in claim 7, wherein said N-vinyllactam is N-vinylpiperidone, N-vinylcaprolactam or, in particular, N-vinylpyrrolidone.

9. A process as claimed in any of claims 1 to 8, wherein the monomer B is selected from esters of monoethylenically unsaturated C₃-C₆ carboxylic acids; styrene; and vinyl esters of C₁-C₂₂ carboxylic acids.

10. A process as claimed in any of claims 1 to 9, wherein vinyl acetate is used as monomer B.

11. A process as claimed in any of claims 1 to 10, wherein the starting mixture to be copolymerized further includes from 0.1 to 20% by weight of a further monoethylenically unsaturated monomer C and/or from 0.1 to 10% by weight of a monomer D which has at least two ethylenically unsaturated bonds.

## Revendications

1. Procédé pour la préparation d'une dispersion aqueuse de copolymère par polymérisation radicalaire de monomères à insaturation éthylénique dans un milieu aqueux contenant
(a) 10 à 90% en poids d'au moins un monomère hydrophile A qui contient un groupe N-vinyle et dont la vitesse de polymérisation présente un maximum à des pH supérieurs à 7,
(b) 10 à 90% en poids d'au moins un monomère hydrophobe à insaturation monoéthylénique dont la vitesse de polymérisation présente un maximum à des pH inférieurs à 7,
(c) 0,01 à 20% du poids total des monomères présents dans la solution, d'au moins un inducteur radicalaire soluble ou insoluble dans l'eau ou d'un mélange d'inducteurs radicalaires solubles dans l'eau et d'inducteurs radicalaires insolubles dans l'eau,
**caractérisé par le fait que**, dans le cours de la réaction de polymérisation, on contrôle le pH en sorte que, entre le début et la fin de la réaction, il diminue de 2 à 5 unités.

2. Procédé selon la revendication 1, **caractérisé par le fait que**, dans le cours de la réaction de polymérisation, le pH diminue de 2,5 à 4,5 unités, plus spécialement de 3 à 4 unités.

3. Procédé selon l'une des revendications 1 ou 2, **caractérisé par le fait que**, au début de la réaction, le pH se situe dans l'intervalle de 6 à 10, de préférence de 7 à 9 et plus spécialement de 7 à 8.

4. Procédé selon les revendications 1 à 3, **caractérisé par le fait que**, à la fin de la réaction, le pH se situe dans l'intervalle de 2 à 6,5, de préférence de 3 à 5 et plus spécialement de 4 à 5.

5. Procédé selon l'une des revendications 1 à 4, **caractérisé par le fait que** la diminution du pH est provoquée par une addition de bases, d'acides et/ou de systèmes tampons appropriés.

6. Procédé selon la revendication 5, **caractérisé par le fait que** l'on utilise en tant qu'acide (composant acide) un inducteur de polymérisation acide.

7. Procédé selon l'une des revendications 1 à 6, **caractérisé par le fait que** le monomère A est choisi parmi les N-vinyllactames contenant 5 à 7 atomes cycliques ; les N-vinylcarboxamides acycliques contenant 2 à 6 atomes de carbone ; et les N-vinylimidazoles et leurs dérivés quaternisés.

8. Procédé selon la revendication 7, **caractérisé en ce que** l'on utilise en tant que N-vinyllactame la N-vinylpipéridone, le N-vinylcaprolactame et tout particulièrement la N-vinylpyrrolidone.

9. Procédé selon l'une des revendications 1 à 8, **caractérisé par le fait que** le monomère B est choisi parmi les esters d'acides carboxyliques à insaturation monoéthylénique en C₃-C₆ ; le styrène et les esters vinyliques d'acides carboxyliques en C₁-C₂₂.

10. Procédé selon l'une des revendications 1 à 9, **caractérisé par le fait que** le monomère B qu'on utilise est l'acétate de vinyle.

11. Procédé selon l'une des revendications 1 à 10, **caractérisé par le fait que** le mélange initial à copolymériser contient en outre 0,1 à 20% en poids d'un autre monomère à insaturation monoéthylénique Cet/ou 0,1 à 10% en poids d'un monomère D contenant au moins deux liaisons à insaturation éthylénique.
